# FASCICULE DE BREVET EUROPEEN

(11) **EP 0 508 873 B1**
(45) Date de publication et mention de la délivrance du brevet: **17.11.1994**
(21) Numéro de dépôt: 92400953.3
(22) Date de dépôt: 06.04.1992
(51) Int. Cl.: B60G 25/00, B60G 7/02, F16F 3/08, F16F 1/42, F16F 15/08, F16F 1/36

(54) **Dispositif élastique de support d'une structure de véhicule sur une structure de suspension**
Elastische Vorrichtung zur Abstützung einer Fahrzeugsstruktur gegenüber einer Aufhängungsstruktur
Elastic device for the support of a vehicle structure on a suspension structure

(30) Priorité: 08.04.1991 FR 9104248
(43) Date de publication de la demande: 14.10.1992
(73) Titulaire: HUTCHINSON, F-75384 Paris Cédex 08 (FR)
(72) Inventeur: Domer, Michel, F-60790 Valdampierre (FR)
(74) Mandataire: Picard, Jean-Claude Georges

(56) Documents cités:
- EP-A- 0 016 469
- EP-A- 0 381 560
- DE-A- 2 131 922
- DE-C- 243 351
- DE-U- 1 684 569
- FR-A- 816 970
- FR-A- 833 798
- GB-A- 944 982
- US-A- 2 367 833
- US-A- 4 395 143

## Description

La présente invention concerne un dispositif élastique de support d'une structure de véhicule sur une structure de suspension du type comportant : une armature extérieure de forme annulaire, étant essentiellement constituée de quatre parois latérales, cette armature étant pourvue de pattes de fixation sur l'une (S) desdites structures ; une armature intérieure en forme de cuvette, dont les parois latérales sont entourées par celles de l'armature extérieure et qui est pourvue d'un moyen de fixation sur l'autre structure ; une masse de matériau élastique disposée dans ladite cuvette et propre à être comprimée entre le fond de celle-ci et une surface de la structure (S) citée en premier, pour reprendre les efforts verticaux (Z) s'exerçant entre lesdites structures ; et un système élastique latéral prévu, pour au moins deux paires opposées de parois, entre les parois latérales respectives desdites armatures, ce système étant agencé pour présenter une forte rigidité dans une direction horizontale (Y) de déplacement relatif entre lesdites structures et une faible rigidité dans une direction horizontale (X) perpendiculaire à la précédente. Un dispositif d'un type similaire est connu de EP-A-0 381 560, appartenant à la demanderesse.

En principe, la première des directions horizontales précitées sera une direction Y transversale par rapport à l'axe du véhicule, la forte rigidité du dispositif dans cette direction (environ 300 à 600 daN/mm) étant requise pour éviter des déports excessifs de la caisse dans les virages, et la seconde direction sera donc la direction longitudinale X, la faible rigidité du dispositif dans cette direction (de l'ordre de 30 daN/mm) étant requise pour filtrer les vibrations de roulement, c'est-à-dire éviter la transmission des vibrations subies par les roues à la caisse du véhicule. Quant à la rigidité du dispositif en vertical (direction Z), intermédiaire entre les deux précédentes, elle devra reprendre les efforts statiques et dynamiques agissant du fait de la caisse du véhicule sur la structure de suspension, et sera normalement de l'ordre de 90 daN/mm. Dans les dispositifs de support de ce type actuellement connus, la grande raideur en direction transversale Y est obtenue par une couche mince de matériau élastique, ou par plusieurs couches minces feuilletées, c'est-à-dire séparées par des lamelles rigides pratiquement verticales et dirigées longitudinalement, et donc propres à augmenter la raideur transversale du dispositif, sans en accroître les raideurs longitudinales en direction X ou verticale en direction Z. Pour augmenter la raideur transversale et l'amener à la valeur finale souhaitée, ces couches feuilletées doivent être précontraintes en compression. Pour ce faire, il est donc nécessaire de les incorporer entre deux plaques d'une monture supplémentaire d'épaisseur supérieure à l'espacement qui sépare les parois latérales concernées des deux armatures précitées, puis d'encastrer cette monture supplémentaire entre ces parois en la comprimant. Cette monture supplémentaire augmente notablement le prix de revient du dispositif et complique aussi la fabrication.

Le but de la présente invention est de permettre la suppression de cette monture.

A cet effet, un dispositif élastique de support du type général défini au début sera, conformément à la présente invention, essentiellement caractérisé d'une part en ce que ladite masse élastique vient, à l'état libre, en saillie (ho) vers l'extérieur au-delà du plan (P) de jonction desdites pattes de fixation avec la structure (S) correspondante, et d'autre part en ce qu'au moins celles des parois latérales entre lesquelles ledit système élastique latéral doit assurer la forte rigidité dans une direction horizontale (Y) sont inclinées de manière telle qu'une compression verticale de ladite masse élastique lors du montage et de la fixation de ladite armature extérieure sur la structure (S) correspondante, rapproche l'une de l'autre les deux parois latérales des paires précitées, soumettant ainsi, entre ces parois, ledit système élastique latéral à une précontrainte de compression.

En d'autres termes, le dispositif conforme à l'invention est livré sans précontrainte dudit système élastique, ce qui permet de se dispenser de la monture supplémentaire mentionnée plus haut, puisque ledit système élastique peut alors être adhérisé, pour au moins deux paires opposées des parois concernées, directement entre les parois latérales opposées correspondantes des armatures extérieure et intérieure du dispositif ; la précontrainte de ce système élastique ne se fera qu'au montage, lors du serrage des pattes de fixation de l'armature extérieure sur la structure correspondante.

En effet, la compression verticale, lors de ce montage, de la masse de matériau élastique disposée dans la cuvette centrale entraînera par décomposition des efforts une mise en précontrainte en compression dudit système élastique latéral, du fait de l'inclinaison des parois latérales entre lesquelles il est adhérisé.

Un mode d'exécution de l'invention va maintenant être décrit à titre d'exemple nullement limitatif, avec référence aux figures du dessin ci-annexé dans lequel :

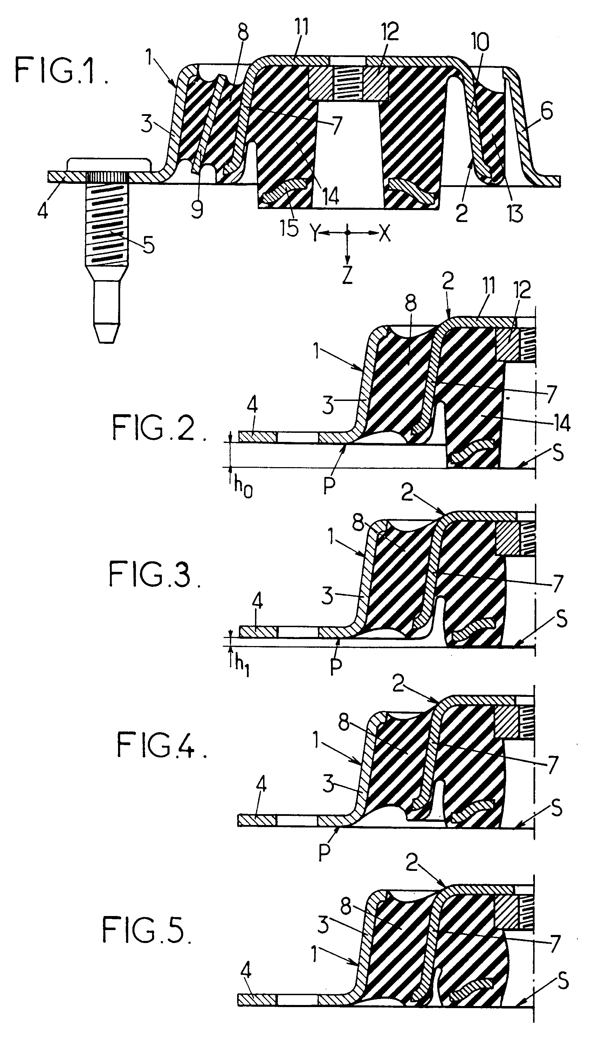

- la figure 1 représente deux demi-coupes d'un dispositif élastique de support conforme à l'invention, selon deux plans axiaux situés à 90° l'un de l'autre, la moitié gauche correspondant au plan transversal selon lequel le dispositif doit présenter une grande rigidité (axe des Y) et la moitié droite correspondant au plan longitudinal (en principe le plan axial du véhicule) selon lequel le dispositif doit présenter une faible rigidité (axe des X) ; et
- les figures 2 à 5 sont les demi-coupes de gauche du même dispositif, pour différents états de compression verticale du support (selon l'axe des Z), mais sans feuilletage dans le système élastique.

Dans les différentes figures, les armatures en tôle extérieure et intérieure ont été référencées respectivement 1 et 2. L'armature intérieure 2 se présente sous la forme d'une cuvette quadrangulaire renversée dont le fond 11 porte intérieurement un écrou serti 12 permettant sa fixation à une structure de véhicule, par exemple à sa caisse (non représentée). L'armature extérieure 1 se présente également sous la forme d'une cuvette quadrangulaire renversée, mais sans fond, dont deux parois latérales opposées 3, inclinées vers l'axe et vers le haut, sont prolongées en bas par des pattes de fixation 4. Ces deux pattes comportent un trou de passage pour une vis 5 dont le serrage permettra l'assujettissement de cette armature 1 sur une autre structure du véhicule, par exemple une structure S appartenant à sa suspension. L'angle d'inclinaison des parois 3 sur l'axe du dispositif est de 5 à 10°. Les deux autres parois opposées 6 (orientées à 90° par rapport aux parois opposées 3) peuvent être droites, c'est-à-dire parallèles à l'axe des Z, ou être également inclinées sur l'axe, de la même valeur que les parois 3. Cela permettra d'utiliser indifféremment les parois 3 ou les parois 6 pour contenir la partie à forte raideur transversale (décrite plus bas) du système élastique latéral.

Les parois 7 de l'armature intérieure 2 qui sont opposées aux parois 3 ont la même inclinaison et, entre les parois 3 et 7 respectives de chacune des deux paires opposées de parois ainsi constituées, est adhérisée une masse de matériau élastique 8 (élastomère ou analogue) constituant une partie de ce que l'on a appelé plus haut le système élastique latéral. Sur la figure 1 on a représenté un système feuilleté grâce à une lamelle métallique 9 inclinée, dirigée longitudinalement, c'est-à-dire selon l'axe des X (il pourrait y avoir plusieurs lamelles) ; sur les autres figures on a représenté une partie de système élastique latéral 8 non feuilletée, mais le fonctionnement global sera le même.

Quant aux parois opposées 10 de l'armature intérieure 2 qui sont dirigées à 90° par rapport aux deux autres parois opposées 7, elles peuvent être légèrement inclinées par rapport à l'axe des Z, mais moins que les parois 7, s'agissant ici essentiellement d'une dépouille d'emboutissage. Sur ces parois 10 est adhérisé un autre bloc de matériau élastique, référencé 13 et destiné, après une faible course libre de filtrage, à prendre progressivement appui sur la paroi opposée 6 correspondante de l'armature extérieure 1 pour assurer la faible rigidité latérale du dispositif vis-à-vis des efforts dirigés selon l'axe X lorsque ces efforts tendent à rapprocher l'une de l'autre les parois 6 et 10.

Enfin le dispositif comporte en 14 une masse de matériau élastique (élastomère ou analogue) adhérisée au fond de la cuvette qui constitue l'armature intérieure 2 et qui est destinée à reprendre les efforts verticaux statiques tendant à écraser le dispositif sous l'effet de la charge du véhicule, de même que les efforts verticaux dus aux vibrations. Dans la partie inférieure de cette masse 14 est noyée une plaque d'appui rigide et profilée 15, évitant les déformations latérales excessives de l'élastomère dans cette zone, sous l'effet des efforts développés dans les directions X ou Y. Le profilage de la pièce 15 permet d'assurer son coincement transversal dans la masse 14 sans adhérisation.

Conformément à une disposition fondamentale de l'invention, complémentaire de celle qui est relative à l'inclinaison des parois latérales 3 et 7, cette masse d'élastomère 14 vient, à l'état libre, nettement en saillie vers l'extérieur, au-delà du plan de jonction P des pattes de fixation 4 avec la structure S. Pour fixer les idées, on peut considérer que la hauteur ho de la partie en saillie à l'état libre est de l'ordre de 6 mm (figure 2). En tout cas on choisit une hauteur en saillie ho telle que sous la charge statique du véhicule (figure 3) la masse 14, partiellement écrasée, soit encore en saillie par rapport au plan précité P. La hauteur h1 de la partie restant en saillie peut être par exemple de l'ordre de 3 mm.

Ainsi, lors du serrage des vis 5 pour assurer la fixation de l'armature extérieure 1 sur la structure S de suspension du véhicule, la masse 14 sera encore plus comprimée, jusqu'à mise en coincidence du plan P avec la surface de la structure S (figure 4). On conçoit que cette dernière compression de la masse 14, conjointe à l'inclinaison des parois 3 et 7 sur l'axe Z, provoque la précontrainte en compression souhaitée des masses 8 du système élastique latéral, évitant ainsi d'avoir à utiliser la monture supplémentaire de la technique antérieure. On obtient d'ailleurs, en même temps, la compensation souhaitée du retrait de moulage.

A la figure 5, on a montré encore le dispositif soumis à une charge verticale descendante supérieure à son poids, d'où réduction de la hauteur hors-tout du dispositif par rapport à la position de repos de la figure 4. On voit que la masse élastique 8 a alors sensiblement repris sa forme telle que sortie de moulage, sans traction au niveau de ses surfaces d'adhérisation.

## Revendications

1. Dispositif élastique de support d'une structure de véhicule sur une structure de suspension, du type comportant : une armature extérieure (1) de forme annulaire, étant essentiellement constituée de quatre parois latérales, cette armature étant pourvue de pattes de fixation (4) sur l'une (S) desdites structures ; une armature intérieure (2) en forme de cuvette, dont les parois latérales (7, 10) sont entourées par celles de l'armature extérieure (1) et qui est pourvue d'un moyen de fixation (12) sur l'autre structure ; une masse de matériau élastique (14) disposée dans ladite cuvette et propre à être comprimée entre le fond (11) de celle-ci et une surface de la structure (S) citée en premier, pour reprendre les efforts verticaux (Z) s'exerçant entre lesdites structures (1, 2) ; et un système élastique latéral (8, 13) prévu pour au moins deux paires opposées de parois, entre les parois latérales respectives (3, 7) desdites armatures (1, 2), ce système (8, 13) étant agencé pour présenter une forte rigidité dans une direction horizontale (Y) de déplacement relatif entre lesdites structures et une faible rigidité dans une direction horizontale (X) perpendiculaire à la précédente, caractérisé d'une part en ce que ladite masse élastique (14) vient, à l'état libre, en saillie (ho) vers l'extérieur au-delà du plan (P) de jonction desdites pattes de fixation (4) avec la structure (S) correspondante, et d'autre part en ce qu'au moins celles des parois latérales (3, 7) entre lesquelles ledit système élastique latéral (8, 13) doit assurer la forte rigidité dans une direction horizontale (Y) sont inclinées de manière telle qu'une compression verticale de ladite masse élastique (14) lors du montage et de la fixation de ladite armature extérieure (1) sur la structure (S) correspondante, rapproche l'une de l'autre les deux parois latérales (3, 7) des paires précitées, soumettant ainsi, entre ces parois, ledit système élastique latéral (8, 13) à une précontrainte de compression.

2. Dispositif selon la revendication 1, caractérisé en ce que lesdites parois latérales respectives (3, 7) entre lesquelles le système élastique latéral (8, 13) doit présenter une forte rigidité vis-à-vis des efforts dans ladite direction horizontale (Y) sont dirigées selon la direction horizontale (X) perpendiculaire à la précédente et sont inclinées sur l'axe des efforts verticaux (2).

3. Dispositif selon la revendication 2, caractérisé en ce que l'angle d'inclinaison desdites parois latérales (3, 7) sur l'axe (Z) des efforts verticaux est compris entre environ 5 et 10°.

4. Dispositif selon l'une quelconque des revendications précédentes, caractérisé en ce que dans sa partie devant présenter une forte rigidité vis-à-vis des efforts suivant ladite direction horizontale (Y), ledit système élastique latéral (8, 13) est constitué d'une masse de matériau élastique (8) adhérisée entre les parois correspondantes (3, 7).

5. Dispositif selon la revendication 4, caractérisé en ce que ladite masse de matériau élastique (8) est feuilletée.

6. Dispositif selon l'une quelconque des revendications 2 à 5, caractérisé en ce que lesdites parois latérales (6, 10) entre lesquelles le système élastique latéral (8, 13) doit présenter une faible rigidité vis-à-vis des efforts dans ladite direction horizontale (X) sont également inclinées sur l'axe des efforts verticaux (Z), l'inclinaison étant la même au moins pour les parois (3, 6) de l'armature extérieure (1).

7. Dispositif selon l'une quelconque des revendications précédentes, caractérisé en ce qu'une plaque rigide profilée (15) est noyée dans l'extrémité de ladite masse élastique (14) opposée au fond (11) de ladite cuvette (2).

8. Dispositif selon l'une quelconque des revendications précédentes, caractérisé en ce que la hauteur - ou dimension dans la direction verticale (Z) - de ladite masse élastique (14) est telle, par rapport à la hauteur restante du dispositif, qu'elle vient encore en saillie (h1) vers l'extérieur au-delà dudit plan (P) de jonction lorsque le dispositif est soumis à une charge statique normale, l'écrasement total de la partie en saillie n'étant obtenu qu'après assujettissement de ladite armature extérieure sur la structure correspondante.

## Claims

1. Resilient device for supporting a vehicle structure on a suspension structure, of the type including: an outer frame (1) which is annular in shape, consisting essentially of four lateral walls, this frame having lugs (4) for fixing to one (S) of the said structures; an inner frame (2) in the form of a bowl, the lateral walls (7, 10) of which are surrounded by those of the outer frame (1) and which is provided with a means (12) for fixing to the other structure; a mass of resilient material (14) disposed in the said bowl and suitable for being compressed between the base (11) of the latter and a surface of the first-mentioned structure (S), to take up the vertical forces (Z) exerted between the said structures (1, 2); and a lateral resilient system (8, 13) provided for at least two opposite pairs of walls, between the respective lateral walls (3, 7) of the said frames (1, 2), this system (8, 13) being arranged so as to have high rigidity in a horizontal direction (Y) of relative movement between the said structures and low rigidity in a horizonal direction (X) perpendicular to the aforesaid one, characterised on the one hand in that said resilient mass (14), in its free state, projects (ho) outwards beyond the joining plane (P) between the said fixing lugs (4) and the corresponding structure (S), and on the other hand in that at least those of the lateral walls (3, 7) between which the said lateral resilient system (8, 13) has to provide high rigidity in a horizontal direction (Y) are inclined in such a way that vertical compression of the said resilient mass (14), during the mounting and fixing of the said outer frame (1) on the corresponding structure (S), brings the two lateral walls (3, 7) of the above-mentioned pairs closer to each other, thus subjecting, between these walls, the said lateral resilient system (8, 13) to a compression prestressing.

2. Device according to Claim 1, characterised in that the said respective lateral walls (3, 7) between which the lateral resilient system (8, 13) must have high rigidity vis-à-vis the forces in the said horizontal direction (Y) are directed in the horizontal direction (X) perpendicular to the aforesaid one and are inclined with respect to the axis of the vertical forces (Z).

3. Device according to Claim 2, characterised in that the angle of inclination of the said lateral walls (3, 7) with respect to the axis (Z) of the vertical forces is between approximately 5° and 10°.

4. Device according to any one of the preceding claims, characterised in that, in its part which must have high rigidity vis-à-vis the forces in the said horizontal direction (Y), the said lateral resilient system (8, 13) consists of a mass of resilient material (8) bonded between the corresponding walls (3, 7).

5. Device according to Claim 4, characterised in that the said mass of resilient material (8) is laminated.

6. Device according to any one of Claims of 2 to 5, characterised in that the said lateral walls (6, 10) between which the lateral resilient system (8, 13) must have low rigidity vis-à-vis the forces in the said horizontal direction (X) are also inclined with respect to the axis of the vertical forces (Z), the inclination being the same at least for the walls (3, 6) of the outer frame (1).

7. Device according to any one of the preceding claims characterised in that a profiled rigid plate (15) is embedded in the end of the said resilient mass (14) opposite the base (11) of the said bowl (2).

8. Device according to any one of the preceding claims, characterised in that the height - or dimension in the vertical direction (Z) - of the said resilient mass (14) is such, with respect to the remaining height of the device, that it projects still further (hl) outwards beyond the said joining plane (P) when the device is subjected to a normal static charge, the complete crushing of the projecting part being obtained only after the said outer frame has been fixed to the corresponding structure.

## Patentansprüche

1. Elastische Vorrichtung zur Abstützung einer Fahrzeugstruktur gegenüber einer Aufhängungsstruktur, die aus folgenden Teilen besteht: einer äußeren Armatur (1), die ringförmig ist und im wesentlichen aus vier Seitenwänden besteht, wobei die Armatur mit Flanschen (4) zur Befestigung an einer der Strukturen (S) versehen ist, einer inneren Armatur (2), die die Form einer Schale hat, deren Seitenwände (7, 10) von denen der äußeren Armatur (1) umgeben sind und die eine Einrichtung (12) zur Befestigung an der anderen Struktur enthält, einer Masse (14) aus elastischem Material, die in der Schale angeordnet ist und zwischen deren Boden (11) und einer Oberfläche der zuerst erwähnten Struktur (S) zusammendrückbar ist, um die senkrechten Kräfte (Z) aufzunehmen, die zwischen den Strukturen (1, 2) auftreten, und einem elastischen seitlichen System (8, 13), das für wenigstens zwei sich gegenüberliegende Paare von Wandungen zwischen den entsprechenden Seitenwandungen (3, 7) der Armaturen (1, 2) vorgesehen ist, wobei das System (8, 13) so ausgebildet ist, daß es eine hohe Steifigkeit in einer waagerechten Richtung (Y) der relativen Verschiebung zwischen den beiden Strukturen und eine geringe Steifigkeit in der horizontalen Richtung (X) senkrecht zu der vorstehend erwähnten Richtung aufweist, dadurch gekennzeichnet, daß einerseits die elastische Masse (14) im freiliegenden Zustand gegenüber der Verbindungsebene (P) der Befestigungsflansche (4) mit der Struktur (S) nach außen übersteht (hₒ) und daß andererseits wenigstens diejenigen Seitenwandungen (3, 7), zwischen denen das seitliche elastische System (8, 13) die hohe Steifigkeit in einer waagerechten Richtung (Y) sicherstellen muß, derart geneigt verlaufen, daß sich bei einer Kompression der elastischen Masse (14) in senkrechter Richtung während der Montage und der Befestigung der äußeren Armatur (1) an der Struktur (S) die beiden seitlichen Wandungen (3, 7) der vorerwähnten Paare einander nähern, und so das elastische seitliche System (8, 13) zwischen diesen Wandungen einer Druckvorspannung unterwerfen.

2. Vorrichtung nach Anspruch 1, dadurch gekennzeichnet, daß die jeweiligen Seitenwandungen (3, 7), zwischen denen das elastische seitliche System (8, 13) eine hohe Steifigkeit gegenüber Kräften aufweisen muß, die in der erwähnten waagerechten Richtung (Y) auftreten, senkrecht zu der vorstehenden Richtung in der horizontalen Richtung (X) gerichtet sind und zur Achse (Z) der senkrechten Kräfte geneigt verlaufen.

3. Vorrichtung nach Anspruch 2, dadurch gekennzeichnet, daß der Neigungswinkel der seitlichen Wandungen (3, 7) zur Achse (Z) der senkrechten Kräfte zwischen etwa 5 und 10° liegt.

4. Vorrichtung nach einem der vorhergehenden Ansprüche, dadurch gekennzeichnet, daß das elastische seitliche System (8, 13) in dem Teil, der eine hohe Steifigkeit gegenüber Kräften gemäß der horizontalen Richtung (Y) aufweisen muß, aus einer Masse (8) aus einem elastischen Material besteht, die zwischen den entsprechenden Wandungen (3, 7) angebracht ist.

5. Vorrichtung nach Anspruch 4, dadurch gekennzeichnet, daß die Masse (8) aus elastischem Material geschichtet ist.

6. Vorrichtung nach einem der Ansprüche 2 bis 5, dadurch gekennzeichnet, daß die Seitenwandungen (6, 10), zwischen denen das elastische seitliche System (8, 13) gegenüber Kräften, die in der erwähnten horizontalen Richtung (X) auftreten, eine geringe Steifigkeit aufweisen muß, auch zur Achse (Z) der senkrechten Kräfte geneigt sind, wobei die Neigung wenigstens für die Wandungen (3, 6) der äußeren Armatur (1) die gleiche ist.

7. Vorrichtung nach einem der vorhergehenden Ansprüche, dadurch gekennzeichnet, daß in das Ende der elastischen Masse (14), das dem Boden der Schale gegenüberliegt, eine starre profilierte Platte (15) eingebettet ist.

8. Vorrichtung nach einem der vorhergehenden Ansprüche, dadurch gekennzeichnet, daß die Höhe - oder die Abmessung in der senkrechten Richtung (Z) - der elastischen Masse (14) in bezug auf die restliche Höhe der Vorrichtung so gewählt ist, daß sie gegenüber der Außenseite der Verbindungsebene (P) noch einen Überstand (h₁) hat, wenn die Vorrichtung einer normalen statischen Belastung unterworfen ist, wobei die vollständige Stauchung des überstehenden Abschnittes erst nach Befestigung der äußeren Armatur an der entsprechenden Struktur erhalten wird.
